# EUROPEAN PATENT APPLICATION

(11) **EP 4 808 107 A1**
(43) Date of publication of application: **16.09.2026**
(21) Application number: 24888445.4
(22) Date of filing: 07.10.2024
(51) Int. Cl.: H04N 5/74, G09G 5/00, G09G 5/37, G09G 5/377

(54) **DESIGNATION METHOD, ADJUSTMENT DEVICE, AND COMPUTER PROGRAM**

(30) Priority: 06.11.2023 JP 2023189495
(71) Applicant: Panasonic Projector & Display Corporation, Kadoma-shi, Osaka 571-8503 (JP)
(72) Inventor: SAKATA, Kazuaki, Kadoma-shi, Osaka 571-0057 (JP)
(74) Representative: Eisenführ Speiser
(86) International application number: PCT/JP2024/035803
(87) International publication number: WO 2025/100146

(57) **Abstract**

The present disclosure facilitates adjustment of a display by a plurality of display devices in a display system that displays a single piece of video content by combining the plurality of display devices. A designation method, designates a sampling area used to adjust display of video by the plurality of display devices when the plurality of display devices are combined to display a single video content. The adjustment device includes an arithmetic circuit and, being capable of accessing a storage medium and a monitor. The designation method, causing the plurality of display devices to display an adjustment image stored in the storage medium, by the arithmetic circuit. The designation method, acquiring, from the imaging device, a captured image obtained by capturing the adjustment image displayed by the plurality of display devices, and causing display on the monitor the acquired captured image, by the arithmetic circuit. The designation method, presenting to a user a candidate of the sampling area, superimposed on the captured image displayed on the monitor, and receiving designation of a sampling area determined on a basis of the candidate of the sampling area according to an operation from the user via an input device, by the arithmetic circuit.

## Description

### TECHNICAL FIELD

The present disclosure relates to a designation method, an adjustment device, and a computer program for designating a sampling area used for adjustment of display by a plurality of display devices in a display system that displays a single video content by combining the plurality of display devices.

### BACKGROUND ART

In a case where a video is projected from a projection device, there is a method of generating adjustment data using a captured image obtained by capturing a projection (for example, Patent Documents 1 to 3 and the like).

Meanwhile, there is a display system that displays a single video content by combining a plurality of display devices, but in such a display system, it is also necessary to adjust a joint portion due to individual differences in color and brightness of a video displayed on each display device. Therefore, in such a display system, data generation for adjustment becomes complicated. First, the adjustment device that adjusts the display by the display device in the display system samples the video displayed on each display device. Further, the adjustment device compares the videos of the sampling areas, and adjusts each parameter of each display device such that each sampling area displays the video of the same degree of color and brightness.

### PRIOR ART DOCUMENT

### PATENT DOCUMENTS

Patent Document 1: JP2017-50667A
Patent Document 2: JPH11-113019A
Patent Document 3: JP2017-203877A

### SUMMARY

### PROBLEMS TO BE SOLVED

However, when the display device is adjusted using the captured image of the video, the sampling area used for the adjustment is important, but the designation of such a sampling area increases the work load of the user.

The present disclosure provides a sampling area designation method, an adjustment device, and a computer program that reduce a work load of designating a sampling area for adjusting a color and brightness of a video.

### SOLUTIONS TO THE PROBLEMS

A designation method of the present disclosure is a method for designating, in an adjustment device, a sampling area used to adjust of video by a plurality of display devices when the plurality of display devices are combined to display a single video content. The adjustment device used in the designation method includes an arithmetic circuit, and is capable of accessing a storage medium and a monitor. The adjustment device causes, by the arithmetic circuit, the plurality of display devices to display an adjustment image stored in the storage medium, and acquires, from the imaging device, a captured image obtained by capturing the adjustment image displayed by the plurality of display devices. The adjustment device causes, by the arithmetic circuit, the display to monitor the acquired captured image, and presents to a user a candidate of the sampling area, superimposed on the captured image displayed on the display. The adjustment circuit receives, by the arithmetic circuit, designation of a sampling area determined on a basis of the candidate of the sampling area according to an operation from the user via an input device.

Such a general and specific aspect may be realized by a system, a method, a computer program, and a combination thereof.

### EFFECTS

The designation method, the adjustment device, and the computer program of the present disclosure can reduce a work load of designating a sampling area used for adjustment of a plurality of display devices in a display system that includes the plurality of display devices and displays a single video content by combining the plurality of display devices.

### BRIEF DESCRIPTION OF THE DRAWINGS

[Fig. 1A] Fig. 1A is a block diagram illustrating a configuration of an adjustment system and an adjustment device according to the present disclosure.
[Fig. 1B] Fig. 1B is a block diagram illustrating a configuration of a display device adjusted by the adjustment system in Fig. 1A.
[Fig. 1C] Fig. 1C is a block diagram illustrating a configuration of an imaging device used in the adjustment system of Fig. 1A.
[Fig. 2] Fig. 2 illustrates an example of an adjustment screen used in the adjustment system of the present disclosure.
[Fig. 3A] Fig. 3A illustrates a first example of a candidate of a sampling area used for color correction in the adjustment device of the present disclosure.
[Fig. 3B] Fig. 3B illustrates a second example of a candidate of the sampling area used for color correction in the adjustment device of the present disclosure.
[Fig. 3C] Fig. 3C illustrates a third example of a candidate of the sampling area used for color correction in the adjustment device of the present disclosure.
[Fig. 3D] Fig. 3D illustrates a fourth example of a candidate of the sampling area used for color correction in the adjustment device of the present disclosure.
[Fig. 4A] Fig. 4A illustrates a first example of a candidate of the sampling area used for brightness correction in the adjustment device of the present disclosure.
[Fig. 4B] Fig. 4B illustrates a second example of a candidate of the sampling area used for brightness correction in the adjustment device of the present disclosure.
[Fig. 4C] Fig. 4C illustrates a third example of a candidate of the sampling area used for brightness correction in the adjustment device of the present disclosure.
[Fig. 4D] Fig. 4D illustrates a fourth example of a candidate of the sampling area used for brightness correction in the adjustment device of the present disclosure.
[Fig. 5] Fig. 5 is a flowchart illustrating an example of processing in the adjustment device of the present disclosure.
[Fig. 6] Fig. 6 is a detailed flowchart of adjustment processing of the flowchart of Fig. 5.
[Fig. 7] Fig. 7 is a flowchart illustrating an example of processing in an imaging device connected to the adjustment device.
[Fig. 8] Fig. 8 is a flowchart illustrating an example of processing in a display device adjusted by the adjustment device.

### DETAILED DESCRIPTION

### [Embodiment]

Hereinafter, an embodiment of the present disclosure will be described with reference to the drawings. However, in the detailed description, unnecessary parts in the description of the conventional technique and the substantially same configuration may be omitted. This is to simplify the description. In addition, the following description and the accompanying drawings are disclosed so that those skilled in the art can fully understand the present disclosure, and are not intended to limit the subject matter of the claims.

A designation method, an adjustment device, and a computer program according to the present disclosure are used for adjustment of a display system that combines a plurality of videos displayed by a plurality of display devices into a single video. Specifically, the designation method, the adjustment device, and the computer program according to the present disclosure designate a sampling area used to adjust the balance of display due to individual differences in color tone and brightness of the plurality of display devices. For example, the sampling area used for color correction and black correction can be designated using the designation method, the adjustment device, and the computer program according to the present disclosure.

In the present disclosure, "color correction" is correction for adjusting the balance of hues displayed by the plurality of display devices included in the display system. The color correction may be referred to as color tone correction. In addition, the brightness may be adjusted according to the color tone by color correction. Therefore, the color correction may be referred to as color luminance correction. In the display system, when a plurality of display devices do not perform adjustment, even if each display device displays the same color (for example, red), it may appear that different colors are displayed. Therefore, in the display system, in a case where display is performed from different display devices, internal parameters are adjusted in advance so that the same color can be viewed with the same color. Specifically, the parameter is adjusted such that the sampling area of the video displayed from each display device has a predetermined condition. In the case where the color correction is performed in the plurality of display devices, each display device is adjusted such that the color displayed from each display device becomes the designated color.

The "black correction" is a correction for adjusting the balance of black displayed by the plurality of display devices included in the display system. In the black correction, the brightness and color tone of black of the plurality of display devices are adjusted. The black correction may be referred to as brightness correction. In the display system, when the plurality of display devices do not perform adjustment, even if each display device displays the same black or dark color, the display device may appear to display with different brightness. Therefore, in the display system, in the case of display from different display devices, internal parameters are adjusted in advance so that the same color can be viewed with the same brightness. Specifically, the parameter is adjusted such that the sampling area of the video displayed from each display device has a predetermined condition. In the case where the black correction is performed in the plurality of display devices, the other display devices are adjusted to match the brightness of the brightest display device among the plurality of display devices. This is because a display device that displays brightly cannot be adjusted to a display device that displays darkly because of the performance limit of the display device.

Further, the "sampling area" is an area used for adjustment such as color correction and black correction in the entire projection area of the video. In a case where adjustment such as color correction or black correction of the plurality of display devices included in the display device is performed, videos displayed by the display devices are compared. At this time, the entire projection area of the video may be compared and adjusted, or a part of the projection area of the video may be compared and adjusted. An area to be compared is set as a sampling area.

### <Adjustment System>

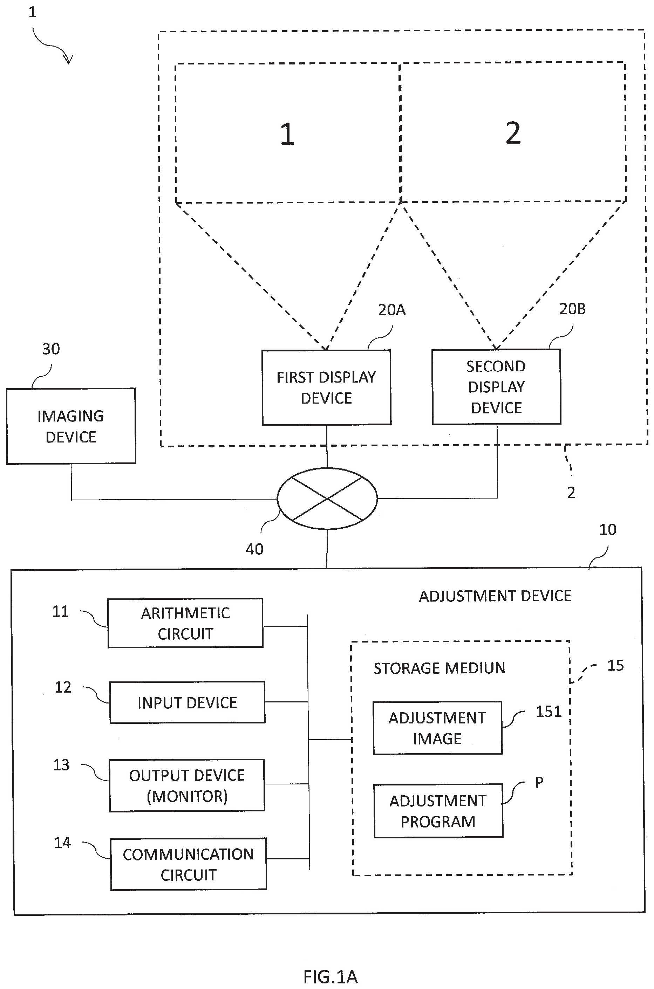

As illustrated in Fig. 1A, an adjustment system 1 according to the embodiment includes an adjustment device 10, a plurality of display devices 20A and 20B, an imaging device 30, and a network 40. The first display device 20A and the second display device 20B constitute a display system 2. The display devices 20A and 20B are controlled by a control device (not illustrated) to display different videos, and can generate a single video content as a whole. In such a display system 2, the adjustment system 1 can adjust the balance of the color tone, brightness, and the like of one piece of video content generated by the plurality of display devices by adjusting the parameter related to the display of each of the display devices 20A and 20B.

In the example illustrated in Fig. 1A, the display system 2 includes two display devices 20A and 20B. However, the number of display devices included in the display system 2 is not limited. Therefore, the number of display devices to be adjusted by the adjustment system 1 is also not limited. In the following description, each of the display devices 20A and 20B will be described as an example of a projection device that projects a video on a screen (not illustrated). However, the types of the display devices 20A and 20B are not limited. The plurality of display devices 20A and 20B may be a plurality of displays arranged adjacent to each other. Although not illustrated, the display system 2 can include an information processing device connected to the plurality of display devices 20A and 20B. In the display system 2, for example, each of the display devices 20A and 20B can display a single video content by projecting the video transmitted from the information processing device.

### <Adjustment Device>

As illustrated in Fig. 1A, the adjustment device 10 is an information processing device including an arithmetic circuit 11, an input device 12, an output device 13, a communication circuit 14, a storage medium 15, and the like. The adjustment device 10 can acquire an image in which a video is displayed by the plurality of display devices 20A and 20B captured by the imaging device 30, and adjust a parameter related to display of each of the display devices 20A and 20B using the acquired image.

The arithmetic circuit 11 is a controller that controls the entire adjustment device 10. For example, the arithmetic circuit 11 reads and executes an adjustment program P stored in the storage medium 15, thereby implementing various pieces of processing related to adjustment of parameters related to display of the display devices 20A and 20B. The arithmetic circuit 11 may be various processors such as a CPU, an MPU, a GPU, an FPGA, a DSP, and an ASIC, or may be a dedicated hardware circuit.

The input device 12 is used for operation by the user and input of data. The input device 12 may be, for example, an operation button, a keyboard, a mouse, a touch panel, a microphone, or the like. The output device 13 is used to output processing results and data. The output device 13 can be, for example, an output means such as a monitor or a speaker.

The communication circuit 14 performs data communication with the display devices 20A and 20B and the imaging device 30. The data communication is performed in a wired and/or wireless manner, for example, according to a known communication standard. For example, wired data communication may be performed by using, as the communication circuit 14, a communication controller of a semiconductor integrated circuit that operates in conformity with the Ethernet (registered trademark) standard and/or the USB (registered trademark) standard. In addition, wireless data communication may be performed by using, as the communication circuit 14, a communication controller of a semiconductor integrated circuit that operates in conformity with IEEE802.11 standards related to a wireless local area network (LAN) and/or so-called 4G/5G/6G related to mobile communication, such as a fourth/fifth/sixth generation mobile communication system.

The storage medium 15 is a storage medium that stores various types of information. The storage medium 15 is realized by, for example, a RAM, a ROM, a flash memory, a solid state drive (SSD), a hard disk drive, other storage mediums, or an appropriate combination thereof. The storage medium 15 stores the adjustment program P which is a computer program executed by the arithmetic circuit 11, various data such as an adjustment image 151 used for adjustment of an image, and the like.

### <Display Device>

The display devices 20A and 20B project a video transmitted from an information processing device such as the adjustment device 10 on a screen. At this time, the display devices 20A and 20B can generate a single video content by receiving different videos and projecting the videos.

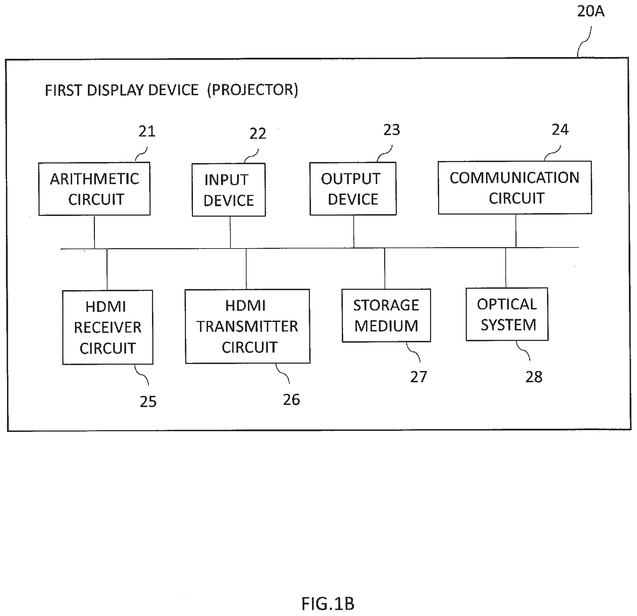

As illustrated in Fig. 1B, the first display device 20A includes an arithmetic circuit 21, an input device 22, an output device 23, a communication circuit 24, an HDMI (registered trademark) receiver circuit 25, an HDMI transmitter circuit 26, a storage medium 27, an optical system 28, and the like. The arithmetic circuit 21, the input device 22, the output device 23, the communication circuit 24, and the storage medium 27 are realized by specific units similar to the arithmetic circuit 11, the input device 12, the output device 13, the communication circuit 14, and the storage medium 15 described above with reference to Fig. 1A. The HDMI receiver circuit 25 enables reception of data from an external device (not illustrated). Furthermore, the HDMI transmitter circuit 26 enables transmission of data to an external device (not illustrated). The display device 20A can communicate a video signal and an audio signal with the external device using the HDMI receiver circuit 25 and the HDMI transmitter circuit 26. The display device 20A includes the optical system 28 that projects a video. The optical system 28 includes a light source such as a laser diode, an LED, or a lamp. In addition, the optical system 28 includes an optical unit including a liquid crystal element that modulates light emitted from a light source, a light modulation element such as a digital mirror divice (DMD), and a projection lens system that guides video light modulated by the light modulation element to a projection surface. Note that the second display device 20B also has the same configuration as the first display device 20A, and thus illustration thereof is omitted.

### <Imaging Device>

The imaging device 30 captures videos displayed on the display devices 20A and 20B. Here, it is preferable that the imaging device 30 can capture the whole of a single video formed by combining a plurality of videos used in the display system 2. In the example illustrated in Fig. 1A, the imaging device 30 captures an image including a video displayed on the screen by the first display device 20A and a video displayed on the screen by the second display device 20B.

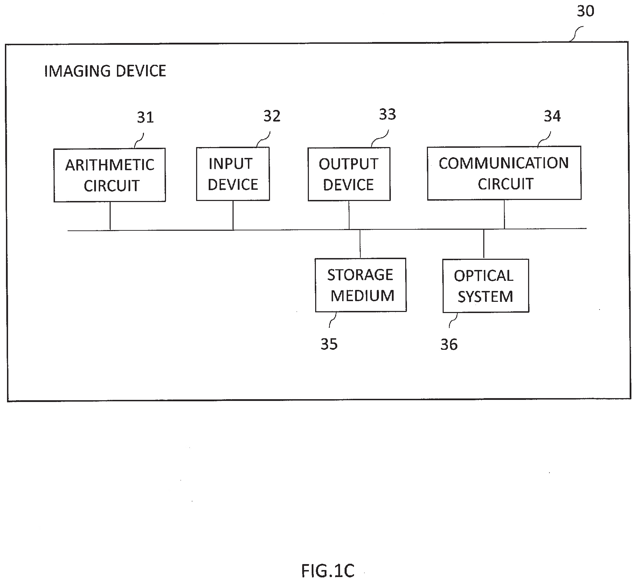

As illustrated in Fig. 1C, the imaging device 30 includes an arithmetic circuit 31, an input device 32, an output device 33, a communication circuit 34, a storage medium 35, an optical system 36, and the like. The arithmetic circuit 21, the input device 22, the output device 23, the communication circuit 24, and the storage medium 27 are realized by specific units similar to the arithmetic circuit 11, the input device 12, the output device 13, the communication circuit 14, and the storage medium 15 described above with reference to Fig. 1A. The optical system 36 includes a series of mechanisms related to acquisition of image data, and acquires the image data according to control from the arithmetic circuit 31. Specifically, the optical system 36 includes an imaging element, an optical system element, an A/D converter, and the like.

### <Processing in Adjustment Device>

Processing executed by the arithmetic circuit 11 will be specifically described.

The arithmetic circuit 11 transmits the adjustment image 151 stored in advance in the storage medium 15 to the plurality of display devices 20A and 20B via the communication circuit 14, and causes the display devices 20A and 20B to display the adjustment image 151. Here, the adjustment image 151 to be displayed on the display devices 20A and 20B may include at least information for specifying the display range by each of the display devices 20A and 20B. For example, the adjustment image 151 may be an image displayed as a predetermined color, or may be an image configured only with a specific color. The adjustment image 151 does not need to be different for each of the display devices 20A and 20B. Therefore, the arithmetic circuit 11 can transmit the same adjustment image 151 to all the display devices 20A and 20B.

Here, an example in which the adjustment image 151 is stored in advance in the storage medium 15 of the adjustment device 10 will be described. However, the adjustment image 151 may be stored in another storage medium. For example, the same adjustment image 151 may be stored in the storage medium of each of the display devices 20A and 20B. Alternatively, the adjustment image 151 may be stored in an external storage medium (not illustrated).

The arithmetic circuit 11 acquires a captured image obtained by photographing the adjustment images displayed by the plurality of display devices 20A and 20B from the imaging device 30 via the communication circuit 14. In addition, the arithmetic circuit 11 stores the acquired captured image in the storage medium 15.

The arithmetic circuit 11 displays the acquired captured image on the monitor 13 which is the output device 13. At this time, the arithmetic circuit 11 presents a candidate of the sampling area to be compared with the reference value to the user for adjustment. Specifically, the candidate of the sampling area is superimposed on the captured image and displayed on the monitor 13. The arithmetic circuit 11 receives the change in the candidate of the sampling area displayed on the monitor 13. For example, the user can input an operation of changing the candidate of the sampling area via the input device 12. As a result, the user can set an optimal sampling area on the basis of the presented candidate of the sampling area from a state where the user can confirm the sampling area on the captured image.

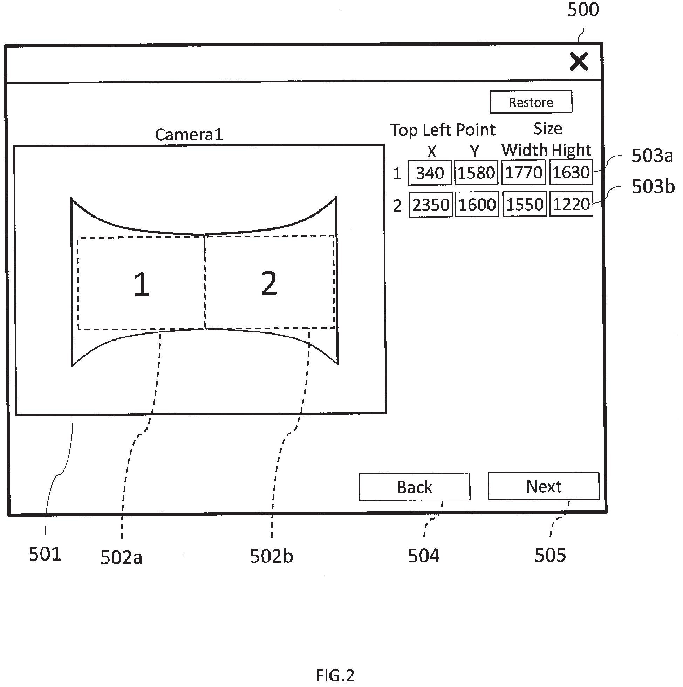

Fig. 2 illustrates an example of an application screen 500 displayed on the monitor13. The application screen 500 illustrated in Fig. 2 is displayed on the monitor13 by executing the adjustment program P which is application software stored in the storage medium 15. For example, the application screen 500 includes a display unit 501 that displays a captured image captured by the imaging device 30. In the example illustrated in Fig. 1A, the adjustment system 1 includes one imaging device 30. However, the adjustment system 1 may include a plurality of imaging devices. In such a case, the user can select an imaging device to be used from a plurality of imaging devices. Fig. 2 illustrates an example in which the imaging device of the identification information of "Camera1" is selected.

Fig. 2 illustrates an example in which the display unit 501 displays captured images in a state where two display devices 20A and 20B project videos (video displayed as "1" and video displayed as "2") in a horizontal line on a screen. However, a method of projecting a video in the display system 2 is not limited. For example, three display devices may project the video in a horizontal line. Alternatively, two of the four display devices may be used to project the video in a horizontal line in the lower stage, and the other two display devices may be used to project the video in a horizontal line in the upper stage. Also in such a case, the display unit 501 displays the captured image including the projection images from all the display devices.

Note that, although description using illustration is omitted, the display unit 501 may display a captured image including a part of projection images from a plurality of display devices. For example, when the number of display devices to be used is large, the projection images from all the display devices cannot be included in the display unit 501. Therefore, in a case where the projection images in whole cannot be included in one captured image, the adjustment system 1 may include a plurality of imaging devices. Each of the plurality of imaging devices may capture the projection image of the designated display device. When having a plurality of imaging devices, the display unit 501 can display the projection image captured by the selected imaging device.

The captured image displayed on the display unit 501 in Fig. 2 includes two videos respectively projected by the two display devices 20A and 20B. However, the arithmetic circuit 11 cannot determine which one of the display devices 20A and 20B is projecting which video. Therefore, the user inputs, via the input device 12, an operation signal that associates the video displayed by each of the display devices 20A and 20B with a corresponding display range in the captured image where the video is displayed. In addition, the arithmetic circuit 11 associates the display range with the display device according to the received operation signal, and stores information regarding the association in the storage medium 15. In the example illustrated in Figs. 1A and 2, the user associates the first display device 20A with the range of "1", and associates the second display device 20B with the range of "2".

Furthermore, a candidate of the sampling area used for adjustment is presented on the display unit 501. Fig. 2 illustrates an example in which the application screen 500 presents a wide range close to each boundary of the display range by the first display device 20A and the display range by the second display device 20B as candidates 502a and 502b of the sampling area. In addition, the application screen 500 includes display units 503a and 503b that display numerical values indicating the positions and sizes of the respective candidates 502a and 502b of the sampling area. In the application screen 500 illustrated in Fig. 2, coordinates of an upper right point of the candidate 502a of the sampling area of the first display device 20A are (340,1580), and a size is 1770×1630. In addition, in the application screen 500 illustrated in Fig. 2, coordinates of an upper right point of the candidate 502b of the sampling area of the second display device 20B are (2350,1600), and a size is 1550×1220. For example, the user can change the size of the candidate 502a of the sampling area by dragging and adjusting the candidate 502a of the sampling area via the input device 12. Furthermore, the user can change the size of the candidate 502b of the sampling area by dragging and adjusting the candidate 502b of the sampling area via the input device 12. Alternatively, the user can change the size of the candidate 502a of the sampling area by changing the numerical value displayed in the display unit 503a via the input device 12. Furthermore, the user can change the size of the candidate 502b of the sampling area by changing the numerical value displayed in the display unit 503b via the input device 12.

More specifically, the arithmetic circuit 11 may set the inside of the frames of the candidates 502a and 502b of the sampling area as the sampling target area. Therefore, the arithmetic circuit 11 performs sampling using the video in the frames of the candidates 502a and 502b of the sampling area displayed on the application screen 500. For example, the arithmetic circuit 11 may present the outer frames of the videos displayed on the display devices 20A and 20B to the user as the candidates 502a and 502b of the sampling area.

The application screen 500 further includes an operation unit 504 for returning to the previous screen and an operation unit 505 for proceeding to the next screen. In the case of determining the candidates 502a and 502b of the sampling area, the user operates the input device 12 and presses the operation unit 505 to proceed to the next screen, for example. As a result, the arithmetic circuit 11 performs sampling in the determined sampling area and executes adjustment processing. The arithmetic circuit 11 averages and compares pixel values in each of the plurality of determined sampling areas. Therefore, the size of each sampling area may not be the same.

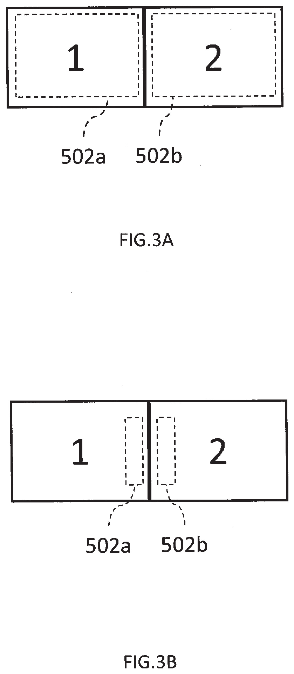

Figs. 3A to 3D illustrate examples of candidates of the sampling area presented when color correction is executed, respectively. Figs. 3A and 3B are examples of the candidates 502a and 502b of the sampling area when the video is displayed in a horizontal line by the two display devices 20A and 20B. Fig. 3A is an example in which a rectangle of almost the entire region of an area where videos displayed on different display devices are adjacent is presented to a user as a candidate of the sampling area. Therefore, in the case of the example illustrated in Fig. 3A, similarly to the case of Fig. 2, the arithmetic circuit 11 presents a wide area similar to each display range as the candidates 502a and 502b of the sampling area. Fig. 3B illustrates an example in which some rectangular areas close to the display ranges of other display devices in the display ranges by the display devices 20A and 20B are presented as the candidates 502a and 502b of the sampling area, respectively. For example, in a case where the video projected on the screen from each of the display devices 20A and 20B is captured by the imaging device 30, a shadow may partially appear. In addition, there may be unevenness without being uniformly displayed on the entire screen. In these cases, if there is a portion in which a shadow appears or unevenness, it is better to perform adjustment excluding a portion with a shadow or a portion with unevenness rather than performing correction on the whole. Such a shadow or unevenness is more likely to occur at the end of the image than at the center of the image. In addition, when viewed with human eyes, it is easy to look as if the entire combined video is adjusted by performing adjustment so as to match the projection video at the joint portion between the projection video and the projection video rather than matching the entire projection video. Therefore, as illustrated in Fig. 3B, the adjustment device 10 may preliminarily set, as the candidates 502a and 502b of the sampling area, a part close to the joint portion and close to the display range of another display device.

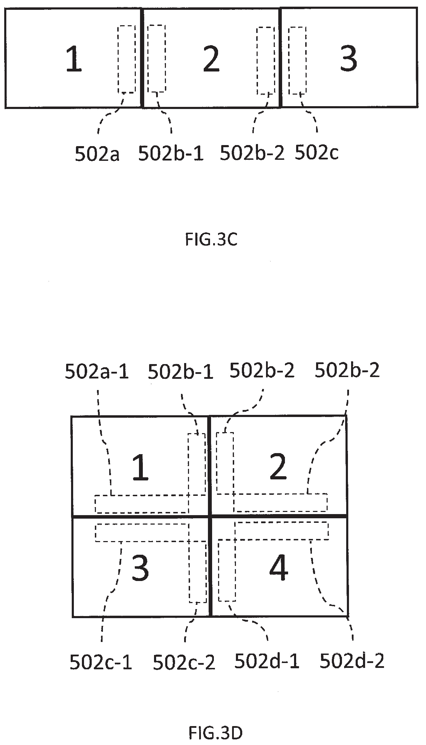

Fig. 3C illustrates an example of the candidates 502a to 502c of the sampling area in a case where videos are displayed in a horizontal line by three display devices. In the example illustrated in Fig. 3C, similarly to Fig. 3B, the candidates 502a to 502c of each sampling area are set at positions close to other display ranges in each display range. In addition, Fig. 3D illustrates an example of the candidates 502a-1 to 502d-1 of the sampling area in a case where the video is displayed in two horizontal display ranges in each of upper and lower two stages by four display devices. Also in the example illustrated in Fig. 3D, the candidates 502a-1 to 502d-1 of each sampling area are set at positions close to other display ranges in each display range.

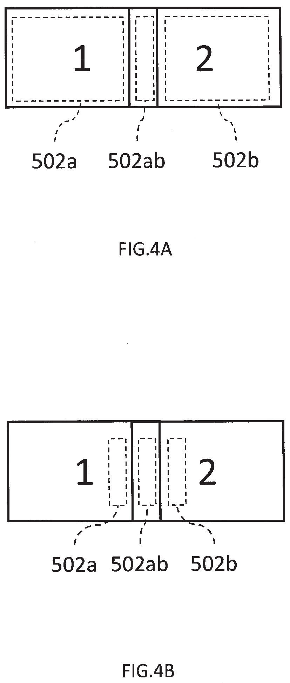

Figs. 4A to 4D illustrate examples of candidates of the sampling area used when black correction is executed, respectively. Figs. 4A to 4B illustrate an example in which a plurality of display devices display videos such that adjacent display ranges partially overlap each other. Figs. 4A and 4B illustrate examples of the candidates 502a, 502ab, and 502b of the sampling area in a case where videos are displayed in a horizontal line by two display devices 20A and 20B. Fig. 4A is an example in which each of nonoverlapping wide areas of each display range and overlapping areas are presented as three different candidates 502a, 502ab, and 502b of the sampling area. In addition, Fig. 4B illustrates an example in which, in the display ranges by the display devices 20A and 20B, each of some areas close to the display ranges of other display devices and overlapping areas are presented as different candidates 502a, 502ab, and 502b of the sampling area. When black correction is performed in a case where there is an overlap as described above, the surrounding brightness is adjusted according to the number of overlaps. For example, each of the candidates 502a and 502b of the sampling area may be adjusted to be brighter than the portion of candidate 502ab of the sampling area. The brightness of the candidates 502a and 502b of the sampling area is adjusted to be about the same as the brightness obtained by adding the portion of candidate 502ab of the sampling area displayed by the display device 20A and the portion of candidate 502ab of the sampling area displayed by the display device 20B.

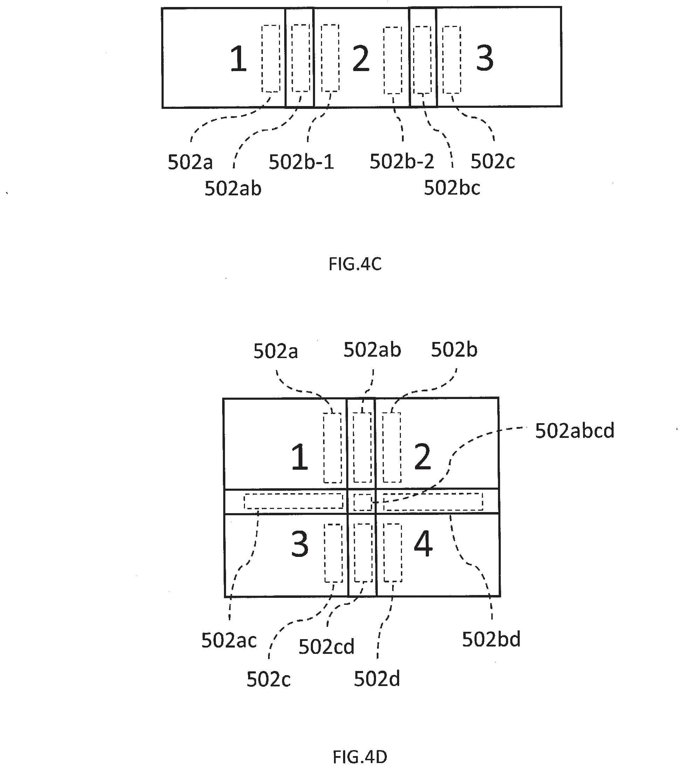

Fig. 4C illustrates an example of the candidates 502a to 502c of the sampling area in a case where videos are displayed in a horizontal line by three display devices. The example illustrated in Fig. 4C includes four candidates 502a, 502b-1, 502b-2, and 502c of the sampling area set in a part close to another display range, and two candidates 502ab and 502bc of the sampling area set in an overlapping part. In addition, Fig. 4D illustrates an example of candidates of the sampling area in a case where a part of the video is displayed in two horizontal display ranges of upper and lower two stages by four display devices in an overlapping manner. In the example illustrated in Fig. 4D, four candidates 502a, 502b, 502c, and 502d of the sampling area without overlapping, four candidates 502ab, 502ad, 502bd of the sampling area, and 502cd with two overlapping numbers, and one candidate 502abcd of the sampling area with four overlapping numbers are included. For example, the candidates 502a, 502b, 502c, and 502d of the sampling area may be adjusted to be brighter than the candidates 502ab, 502ad, 502bd, and 502cd of the sampling area. For example, the brightness obtained by adding the portion of candidate 502abcd of the sampling area displayed by each display device 20 may be adjusted to be about the same as the brightness obtained by adding the portion of the candidate 502ab of the sampling area displayed by each display device 20. Similarly, all of the brightness obtained by adding the portion of candidate 502abcd of the sampling area displayed by each display device 20, the brightness obtained by adding the portion of 502ac displayed by each display device 20, the brightness obtained by adding the portion of 502bd, the brightness obtained by adding the portion of 502cd, and the brightness of each of 502a, 502b, 502c, and 502d may be adjusted to be about the same.

Note that, in the above description, the candidates of the sampling area used for the color correction have been described with reference to Figs. 3A to 3D, taking a case where the display ranges do not overlap as an example. On the other hand, when the adjacent display ranges are projected so as to partially overlap each other, for example, only the range excluding the overlapping portion can be used as the sampling area. At this time, the portion where the plurality of display ranges overlap may be projected on the video projected from each display device using edge blending. Here, "edge blending" is a method used when combining videos projected from a plurality of display devices. For example, when a video is projected from a plurality of display devices, the video is projected such that projection areas of adjacent display devices partially overlap each other. In addition, the brightness of the video in the overlapping area is gradually cross-faded to make the joint inconspicuous. A method of making the joint inconspicuous is referred to as "edge blending". In addition, in a case where there is overlapping as illustrated in Fig. 4B, only the adjacent areas without overlapping are set as the candidates 502a and 502b of the sampling area, and the portion of 502ab is not a sampling target, and the sampling results of the candidates 502a and 502b of the areas may be used.

In the above description, the candidates of the sampling area used for the black correction are illustrated using Figs. 4A to 4D as an example in which a part of each display range overlaps. On the other hand, when the display devices do not overlap each other, for example, the correction parameters of other display devices may be adjusted in accordance with the color and luminance of the video projected from the display device that projects brightest to project the video.

The arithmetic circuit 11 may set the area except for the area corresponding to the specific condition as the candidate of the sampling area. For example, it is conceivable that some shadow appears in a place where the luminance change is large. Therefore, the arithmetic circuit 11 may set, as candidates of the sampling area, areas excluding places where a specific luminance change occurs.

The arithmetic circuit 11 obtains the correction parameter for adjusting the value indicating the sampling area in the captured image so as to be represented by the specified reference value. For example, the arithmetic circuit 11 may receive selection of one display device from the plurality of display devices 20A and 20B. The arithmetic circuit 11 may designate the sampling result of the selected display device sampling area as the reference value. The arithmetic circuit 11 obtains the correction parameter such that the display of the unselected display device is adjusted to the designated reference value.

Note that the image of the sampling area used to generate the correction parameter may not be the captured image used to determine the sampling area. For example, the arithmetic circuit 11 can obtain the correction parameter using an image captured after the sampling area is set.

When executing color correction, the arithmetic circuit 11 causes each of the display devices 20A and 20B to display light of each color of red (R), green (G), and blue (B) as an adjustment image. When executing color correction, the arithmetic circuit 11 may cause each of the display devices 20A and 20B to display light of each color of cyan (C), magenta (M), yellow (Y), and white (W) as an adjustment image. In addition, the arithmetic circuit 11 obtains the correction parameter for each color using the captured image for each color.

When executing the black correction, the arithmetic circuit causes each of the display devices 20A and 20B to display black as the adjustment image. The arithmetic circuit 11 obtains the correction parameter from the captured image using the sampling area having the brightest gradation as the reference value.

The arithmetic circuit 11 transmits the obtained correction parameter to the target display devices 20A and 20B, and adjusts the parameters of the display devices 20A and 20B.

As described above, in the adjustment system 1, when the videos respectively displayed on the plurality of display devices 20A and 20B are combined and displayed, the work load of designating the sampling area used for the adjustment of the plurality of display devices 20A and 20B can be reduced, and the sampling area for improving the adjustment accuracy can be designated.

### <Processing in Adjustment Device>

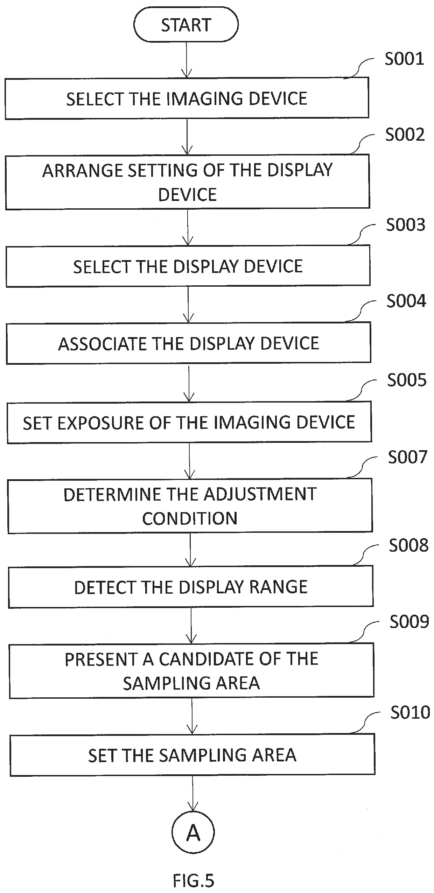

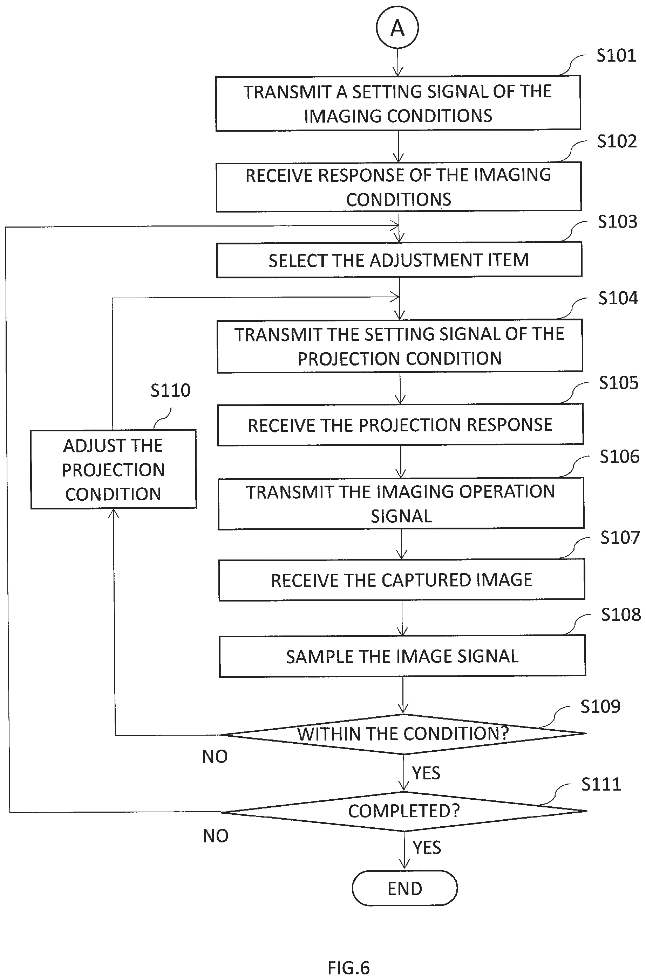

Adjustment processing executed by the arithmetic circuit 11 will be described with reference to flowcharts illustrated in Figs. 5 and 6. The description illustrated in Fig. 5 is processing related to various settings up to the actual adjustment processing. The arithmetic circuit 11 displays a predetermined application screen on the monitor 13 by executing the adjustment program P, and the adjustment processing is started. The flowchart of Fig. 5 mainly illustrates processing according to an operation by the user via the application screen. Furthermore, the description illustrated in Fig. 6 is processing executed by the arithmetic circuit 11 in the actual adjustment processing.

The arithmetic circuit 11 receives the selection of the imaging device 30 used in the adjustment (S001). Specifically, the arithmetic circuit 11 receives selection of the imaging device 30 to be used in adjustment via the input device 12 operated by the user on the application screen 500 displayed on the monitor13.

The arithmetic circuit 11 receives the arrangement setting of the display devices 20A and 20B (S002). Specifically, the setting of how many display devices to use and how the plurality of display devices are arranged to display the image is received. Also in this case, the arithmetic circuit 11 receives the setting via the input device 12 operated by the user on the application screen 500 displayed on the monitor13.

The arithmetic circuit 11 receives the selection of the display devices 20A and 20B to be used (S003). Specifically, the arithmetic circuit 11 receives selection of the display devices, the number of which has been set in step S002 as display devices to be used in the display system 2 via the input device 12 operated by the user on the application screen 500 displayed on the monitor13. Here, the display devices 20A and 20B used in the display system 2 are adjustment targets in the adjustment system 1.

The arithmetic circuit 11 associates the display devices 20A and 20B selected in step S003 with each of the display ranges of the arrangement set in step S002 (S004). Also in this case, the arithmetic circuit 11 receives, on the application screen 500 displayed on the monitor13, via the input device 12 operated by the user, an operation signal for associating a display device that projects a video to each display range.

The arithmetic circuit 11 sets exposure of the imaging device 30 (S005). Specifically, the arithmetic circuit 11 operates exposure setting via the input device 12 operated by the user on the application screen 500 displayed on the monitor13. For example, the arithmetic circuit 11 causes the display devices 20A and 20B to output a test image or light. In addition, the arithmetic circuit 11 causes the imaging device 30 to capture an image and adjust exposure.

The arithmetic circuit 11 receives the adjustment condition (S007). Here, the arithmetic circuit 11 also receives the adjustment condition via the input device 12 operated by the user on the application screen 500 displayed on the monitor13. For example, the adjustment condition can receive a reference display device among the plurality of display devices 20A and 20B. For example, when receiving that the first display device 20A is used as a reference, the arithmetic circuit 11 generates an adjustment parameter that adjusts the display image by the second display device 20B to the display image of the first display device 20A in the subsequent processing. In addition, for example, when receiving that the display device displaying a dark display image is used as a reference, the arithmetic circuit 11 generates an adjustment parameter to adjust the display device displaying a bright display image to the display device displaying a dark display image in the subsequent processing. For example, in receiving the adjustment condition, the arithmetic circuit 11 can cause each of the display devices 20A and 20B to project a specific video, display the captured image on the application screen 500, and cause the user to select the adjustment condition.

The arithmetic circuit 11 causes each of the display devices 20A and 20B to sequentially output an image (light), and detects a display range in which a video is displayed by each of the display devices 20A and 20B (S008). As a method of detecting the display range by each of the display devices 20A and 20B, the following method can be considered. For example, the arithmetic circuit 11 first displays a black image (255) on both the first display device 20A and the second display device 20B, and acquires a captured image (captured image Ia) by the imaging device 30. Next, the arithmetic circuit 11 causes the first display device 20A to display a white image (0) and causes the second display device 20B to display the black image (255), and acquires a captured image (captured image Ib) by the imaging device 30. Subsequently, the arithmetic circuit 11 causes the first display device 20A to display a black image (255) and causes the second display device 20B to display a white image (0), and acquires an image (captured image Ic) captured by the imaging device 30. Thereafter, the arithmetic circuit 11 subtracts the signal value of each pixel of the captured image Ib from the signal value of each pixel of the captured image Ia, thereby obtaining the display range of the first display device 20A. Furthermore, the display range of the second display device 20B is obtained by subtracting the signal value of each pixel of the captured image Ic from the signal value of each pixel of the captured image Ia. Note that the display devices 20A and 20B display a signal having a value of 0 or 255. However, the value of each pixel of the captured image is not 0 or 255 depending on the characteristics of the display devices 20A and 20B or the influence of the environment or the like. For example, when the signal value of the display image is 0, the value is relatively close to 0, and when the signal value of the display image is 255, the value is relatively close to 255.

The arithmetic circuit 11 determines and presents a candidate of the sampling area by a predetermined method on the basis of the display range of each of the display devices 20A and 20B detected in step S008 (S009). For example, in a case where it is determined that the entire display range is set as the sampling area, the arithmetic circuit 11 presents a state in which the candidates 502a and 502b of the sampling area are superimposed on the display range on the display unit 501 of the application screen 500 as illustrated in Fig. 3A. In addition, in a case where it is determined that a part of the display ranges adjacent to each other is set as the sampling area, the arithmetic circuit 11 presents a state in which the candidates 502a and 502b of the sampling area are superimposed on the display range on the display unit 501 of the application screen 500 as illustrated in Fig. 3B.

The arithmetic circuit 11 sets the sampling area on the basis of the candidate of the sampling area presented in step S009 (S010). For example, the arithmetic circuit 11 receives an operation of adjusting or determining the candidates 502a and 502b of the sampling area via the input device 12 operated by the user on the application screen 500 displayed on the monitor13, and receives the setting of the sampling area.

Subsequently, the arithmetic circuit 11 proceeds to the processing of the flowchart illustrated in Fig. 6, and moves to the actual adjustment processing using the sampling area of the sampling received in step S009.

First, the arithmetic circuit 11 transmits a setting signal of the imaging conditions to the imaging device 30 via the communication circuit 14 (S101). The imaging conditions defined by the setting signal transmitted by the arithmetic circuit 11 are optimally set by, for example, an application program. Alternatively, the imaging conditions may be conditions set by the user. Specifically, the imaging conditions can include conditions such as a shutter speed, an aperture, and a gain.

The arithmetic circuit 11 receives the response indicating the completion of the setting from the imaging device 30 with respect to the setting signal transmitted in step S101 via the communication circuit 14 (S102).

The arithmetic circuit 11 selects the adjustment item (S103). The adjustment items in the case of color correction may be red (R), green (G), and blue (B). In addition, the adjustment items in the case of color correction may be cyan (C), magenta (M), yellow (Y), and white (W). Furthermore, the adjustment item in the case of black correction may be black. For example, the item to be adjusted and the order of adjustment are determined in advance, and the arithmetic circuit 11 may select the item to be adjusted in the determined order.

The arithmetic circuit 11 transmits the setting signal of the projection condition determined for each of the display devices 20A and 20B to each of the display devices 20A and 20B via the communication circuit 14 (S104). The projection condition defined by the setting signal transmitted by the arithmetic circuit 11 is, for example, a preset condition in the first time. Then, in a case where the processing is repeated, the projection condition is changed according to the sampling result in step S108 described later. The signal for setting the projection condition includes a request for projection.

The arithmetic circuit 11 receives a response indicating the completion of the setting and the execution of the projection from each of the display devices 20A and 20B with respect to the setting signal transmitted in step S104 via the communication circuit 14 (S105).

When receiving the projection response in step S104, the arithmetic circuit 11 transmits the imaging operation signal to the imaging device 30 via the communication circuit 14 (S106).

Thereafter, the arithmetic circuit 11 receives the captured image captured according to the imaging operation signal transmitted in step S106 from the imaging device 30 via the communication circuit 14 (S107).

The arithmetic circuit 11 samples the signal of the sampling area set in step S009 in the captured image received in step S107 (S108).

The arithmetic circuit 11 determines whether the signal sampled in step S108 is within the range of the condition (S109). For example, the arithmetic circuit 11 may obtain an average value of the signal values of the respective pixels in the sampled area, compare the obtained average value with a predetermined threshold value, and in a case where the obtained average value is equal to or less than the threshold value (or equal to or more than the threshold value), the arithmetic circuit 11 may determine that the signal is within the range of the condition. Alternatively, the arithmetic circuit 11 may compare the signal of each pixel in the sampled area with a predetermined threshold value, and in a case where a predetermined ratio or more of the pixels is equal to or less than the threshold value (or equal to or more than the threshold value), the arithmetic circuit 11 may determine that the signal within the range of the condition.

When the signal is not within the range of the condition (NO in S109), the arithmetic circuit 11 adjusts the projection condition (S110), returns to step S104, and repeats the processing of steps S104 to S109.

On the other hand, when the signal is within the range of the condition (YES in S109), the arithmetic circuit 11 determines whether the adjustment has been completed for all the items (S111). Specifically, the arithmetic circuit 11 determines whether adjustment has been completed for all the adjustment items of red (R), green (G), blue (B), cyan (C), magenta (M), yellow (Y), white (W), and black. Note that specific processing may be different for each color.

When the adjustment is not completed (NO in S111), the processing returns to step S103, an unadjusted item is newly selected, and the processing in steps S103 to S111 is repeated.

### <Processing in Imaging Device>

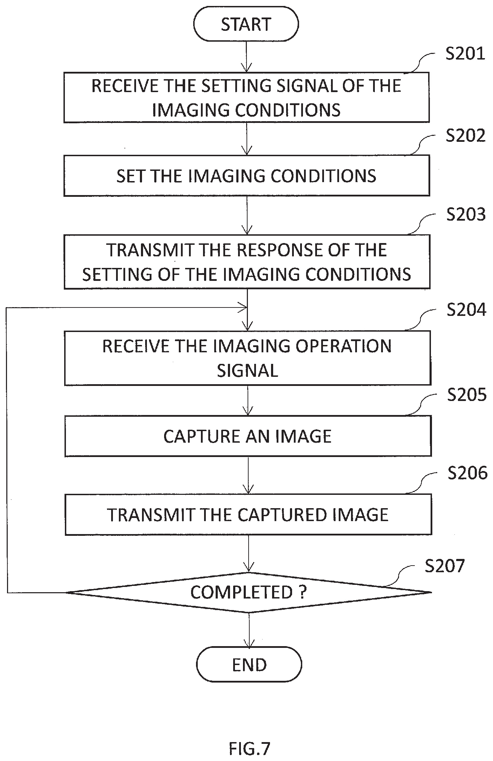

Processing executed in the imaging device 30 according to the signal received from the adjustment device 10 will be described with reference to the flowchart illustrated in Fig. 7.

The arithmetic circuit 31 receives the setting signal of the imaging conditions transmitted from the adjustment device 10 via the communication circuit 34 (S201).

The arithmetic circuit 31 sets the imaging conditions using the setting signal received in step S201 (S202). The arithmetic circuit 31 transmits the response indicating the completion of the setting of the imaging signal to the adjustment device 10 via the communication circuit 34 (S203).

Thereafter, at the imaging timing, the arithmetic circuit 11 receives the imaging operation signal transmitted from the adjustment device 10 via the communication circuit 34 (S204).

The arithmetic circuit 31 captures an image in response to the imaging operation signal received in step S204 (S205). The obtained captured image includes videos projected from the display devices 20A and 20B onto the screen. The arithmetic circuit 31 transmits the captured image captured in step S205 to adjustment device 10 via the communication circuit 34 (S206).

The arithmetic circuit 31 returns to step S204 and repeats the processing of S204 to S207 until a series of processing for adjustment in the adjustment system 1 is completed (YES in S207).

### <Processing in Display Device>

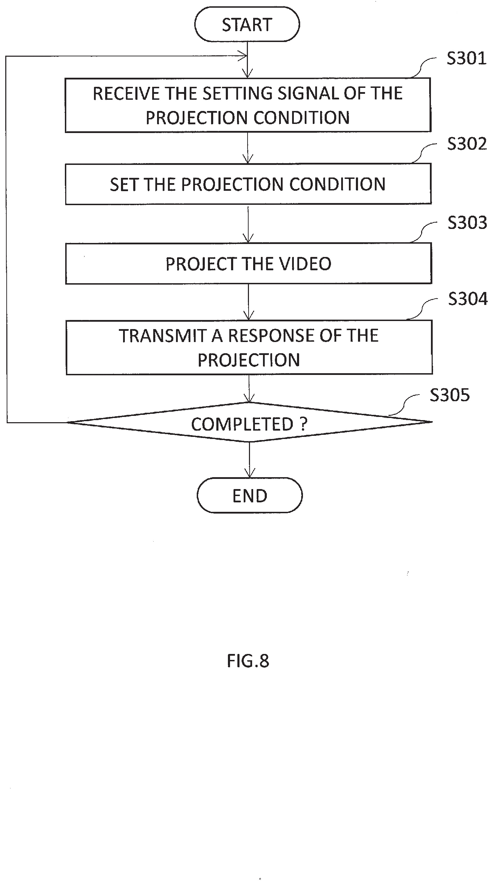

Processing executed in the first display device 20A according to a signal received from the adjustment device 10 will be described with reference to a flowchart illustrated in Fig. 8.

The arithmetic circuit 21 receives the setting signal of the projection condition transmitted from the adjustment device 10 via the communication circuit 24 (S301).

The arithmetic circuit 21 sets the projection condition using the setting signal received in step S301 (S302). The arithmetic circuit 21 projects the video under the condition set in step S302 (S303). Subsequently, the arithmetic circuit 21 transmits a response indicating the execution of the projection to the adjustment device 10 (S304).

The arithmetic circuit 21 returns to step S301 and repeats the processing of S301 to S305 under a new projection condition until the adjustment of the first display device 20A is completed (YES in S305).

Note that processing similar to the processing described above is also executed in the second display device 20B, and thus the description using the flowchart is omitted.

In the adjustment system 1 of the present disclosure, it is possible to reduce the work load of designating the area for adjusting the color and brightness of the video and to designate the area for improving the adjustment accuracy.

### <<Outline of Embodiment>>

(1) A designation method of the present disclosure may be a designation method for designating, in an adjustment device connected to a plurality of display devices and an imaging device, a sampling area used to adjust display of video by the plurality of display devices when the plurality of display devices are combined to display a single video content, the adjustment device including an arithmetic circuit, the adjustment device being capable of accessing a storage medium and a monitor,
   the designation method comprising:
   by the arithmetic circuit,
   causing the plurality of display devices to display an adjustment image stored in advance in the storage medium;
   acquiring, from the imaging device, a captured image obtained by capturing the adjustment image displayed by the plurality of display devices;
   causing the monitor to display the acquired captured image;
   presenting to a user a candidate of the sampling area, superimposed on the captured image displayed on the monitor; and
   receiving designation of a sampling area determined on the basis of the candidate of the sampling area according to an operation from the user via an input device.

As a result, it is possible to reduce the work load of designating the sampling area and to designate the sampling area for improving the adjustment accuracy.

(2) In the designation method of (1), the arithmetic circuit may present an outer frame of a video displayed on each of different display devices to a user as a candidate of the sampling area.

As a result, the entire range of the video displayed on each display device can be presented as the candidate of the sampling area.

(3) In the designation method of (1), the arithmetic circuit may present an area in which the videos are adjacent to each other, of a part of the video displayed on each display device, to a user as a candidate of the sampling area.

Consequently, a part of the video displayed on each display device can be presented as the candidate of the sampling area.

(4) In the designation methods of (1) to (3), a change may be received for the presented candidate of the sampling area.

As a result, the user can easily designate an appropriate sampling area using the presented candidates of the sampling area.

(5) An adjustment device of the present disclosure may be an adjustment device that is connected to a plurality of display devices and an imaging device and adjusts a video by the plurality of display devices when combining the plurality of display devices to display a single video content,
the adjustment device including an arithmetic circuit, the adjustment device being capable of accessing a storage medium and a monitor,
in which the arithmetic circuit may
cause the plurality of display devices to display an adjustment image stored in advance in the storage medium,
obtain a captured image obtained by capturing the adjustment image displayed by the plurality of display devices from the imaging device,
cause the display to monitor the acquired captured image,
present to a user a candidate of a sampling area used for adjustment of the video, superimposed on the captured image displayed on the monitor,
receive designation of a sampling area determined by the user on the basis of the candidate of the sampling area via an input device, and
obtain a correction parameter for adjusting display by using the received image of the sampling area.

As a result, it is possible to reduce the work load of designating the sampling area and to designate the sampling area for improving the adjustment accuracy.

(6) In the adjustment device of (5), the arithmetic circuit may
receive selection of one display device from the plurality of display devices, and
obtain a correction parameter for adjusting an unselected display device according to the selected display device.

Consequently, it is possible to match the display video of the selected display device with the display video of another display device.

(7) A computer program of the present disclosure is a computer program for designating a sampling area to be used for adjustment of display of a video by a plurality of display devices when the plurality of display devices are combined to display a single video content in an adjustment device connected to the plurality of display devices and an imaging device, the computer program causing an information processing device to execute the designation method according to any one of (1) to (5).

As a result, it is possible to reduce the work load of designating the sampling area and to designate the sampling area for improving the adjustment accuracy.

The designation method, the adjustment device, and the computer program described in all claims of the present disclosure are realized by, for example, cooperation of hardware resources, such as a processor and a memory, with a computer program.

### INDUSTRIAL APPLICABILITY

The designation method, the adjustment device, and the computer program of the present disclosure are useful for adjustment of a display system that combines videos displayed by a plurality of display devices into a single video.

## Claims

1. A designation method for designating, in an adjustment device connected to a plurality of display devices and an imaging device, a sampling area used to adjust display of video by the plurality of display devices when the plurality of display devices are combined to display a single video content, the adjustment device including an arithmetic circuit, the adjustment device being capable of accessing a storage medium and a monitor,
the designation method comprising:
by the arithmetic circuit,
causing the plurality of display devices to display an adjustment image stored in the storage medium;
acquiring, from the imaging device, a captured image obtained by capturing the adjustment image displayed by the plurality of display devices;
causing the monitor to display the acquired captured image;
presenting to a user a candidate of the sampling area, superimposed on the captured image displayed on the monitor; and
receiving designation of a sampling area determined on a basis of the candidate of the sampling area according to an operation from the user via an input device.

2. The designation method according to claim 1, wherein the arithmetic circuit presents an outer frame of a video displayed on each of different display devices to a user as a candidate of the sampling area.

3. The designation method according to claim 1, wherein the arithmetic circuit presents an area in which the videos are adjacent to each other, of a part of the video displayed on each display device, to a user as a candidate of the sampling area.

4. The designation method according to claim 1, wherein the arithmetic circuit receives a change from the presented candidate of the sampling area.

5. An adjustment device adjusts a video by the plurality of display devices when combining the plurality of display devices to display a single video content, wherein the adjustment device connected to a plurality of display devices and an imaging device, and the adjustment device comprising an arithmetic circuit, the adjustment device being capable of accessing a storage medium and a monitor,
wherein the arithmetic circuit is configured to:
cause the plurality of display devices to display an adjustment image stored in advance in the storage medium,
obtain a captured image obtained by capturing the adjustment image displayed by the plurality of display devices from the imaging device,
cause the monitor to display the acquired captured image,
present to a user a candidate of a sampling area used for adjustment of the video, superimposed on the captured image displayed on the monitor,
receive designation of a sampling area determined by the user on a basis of the candidate of the sampling area via an input device, and
obtain a correction parameter for adjusting display by using the received image of the sampling area.

6. The adjustment device according to claim 5, wherein
the arithmetic circuit is configured to:
receive selection of one display device from the plurality of display devices, and
obtain a correction parameter for adjusting an unselected display device according to the selected display device.

7. A computer program for designating a sampling area to be used for adjustment of display of a video by a plurality of display devices when the plurality of display devices are combined to display a single video content in an adjustment device connected to the plurality of display devices and an imaging device,
the computer program causing an information processing device to execute the method according to claim 1.
